# EUROPÄISCHE PATENTSCHRIFT

(11) **EP 2 238 058 B1**
(45) Veröffentlichungstag und Bekanntmachung des Hinweises auf die Patenterteilung: **28.09.2011**
(21) Anmeldenummer: 09707011.4
(22) Anmeldetag: 14.01.2009
(51) Int. Cl.: B65G 49/04

(54) **BEHANDLUNGSANLAGE UND VERFAHREN ZUR OBERFLÄCHENBEHANDLUNG VON GEGENSTÄNDEN**
TREATMENT SYSTEM AND METHOD FOR THE SURFACE TREATMENT OF OBJECTS
INSTALLATION ET PROCÉDÉ DE TRAITEMENT DE SURFACE D'OBJECTS

(30) Priorität: 29.01.2008 DE 102008006466
(43) Veröffentlichungstag der Anmeldung: 13.10.2010
(73) Patentinhaber: Volkswagen Aktiengesellschaft, 38436 Wolfsburg (DE)
(72) Erfinder: JANKOWSKI, Ralf, 38440 Wolfsburg (DE)
(74) Vertreter: Graefe, Jörg
(86) Internationale Anmeldenummer: PCT/EP2009/000157
(87) Internationale Veröffentlichungsnummer: WO 2009/095152

(56) Entgegenhaltungen:
- EP-A- 1 050 495
- WO-A-02/072284
- WO-A-2008/096235
- DE-A1- 19 950 892
- DE-B- 1 159 349
- US-A- 4 812 211

## Beschreibung

Die vorliegende Erfindung bezieht sich auf eine Behandlungsanlage zur Oberflächenbehandlung von Gegenständen, insbesondere Fahrzeugkarosserien, umfassend eine Mehrzahl von Transporteinrichtungen, auf denen jeweils mindestens ein zu behandelnder Gegenstand lösbar anbringbar ist, eine Fördereinrichtung, mittels derer die Transporteinrichtungen durch die Behandlungsanlage förderbar sind, mindestens ein Behandlungsbad, das in einer ersten Förderebene der Behandlungsanlage angeordnet ist und in das die Transporteinrichtungen mit den darauf angeordneten Gegenständen einbringbar sind, und mindestens eine Reinigungsvorrichtung, die zum Reinigen der Transporteinrichtungen nach der Oberflächenbehandlung der Gegenstände geeignet und eingerichtet ist. Darüber hinaus betrifft die vorliegende Erfindung ein Verfahren zur Oberflächenbehandlung von Gegenständen, insbesondere Fahrzeugkarosserien.

Behandlungsanlagen zur Oberflächenbehandlung von Gegenständen, insbesondere Fahrzeugkarosserien, mittels derer die Oberflächen der Gegenstände beispielsweise lackiert oder anderweitig behandelt werden können, sind aus dem Stand der Technik in unterschiedlichen Ausführungsformen bereits bekannt.

Die DE 196 41 048 A1 offenbart zum Beispiel eine Behandlungsanlage zur Oberflächenbehandlung von Gegenständen, insbesondere Fahrzeugkarosserien, die mehrere in Förderrichtung hintereinander angeordnete Behandlungsbäder aufweist, in die die zu behandelnden Gegenstände (beispielsweise Fahrzeugkarosserien), welche lösbar auf Transporteinrichtungen angeordnet sind, einbringbar sind. Die zu behandelnden Gegenstände werden dabei in einem Rotationstauchverfahren durch Überlagerung einer Translations- und einer Rotationsbewegung am Anfang eines Behandlungsbades in das jeweilige Behandlungsbad eingetaucht und am Ende des Behandlungsbades durch eine Überlagerung einer Translations- und einer Rotationsbewegung wieder aus dem Behandlungsbad gefördert. Die Transporteinrichtungen (Drehschemel) ermöglichen dabei eine Rotationsbewegung um die eigene Achse. Nach der Oberflächenbehandlung der Gegenstände müssen die Transporteinrichtungen in einem relativ aufwändigen Prozess manuell gereinigt werden.

Aus dem Stand der Technik sind bereits Ansätze bekannt, um die Reinigung der Transporteinrichtungen nach der Oberflächenbehandlung der Gegenstände zu automatisieren und dadurch zu vereinfachen. Eine Behandlungsanlage gemäß dem Oberbegriff des Anspruchs 1 ist aus dem US-Patent US 5,110,440 bekannt. Bei dieser Behandlungsanlage, mittels derer Fahrzeugkarosserien einem kathodischen Tauchlackierprozess unterzogen werden können, ist eine Ladestation vorgesehen, in der eine noch unlackierte Fahrzeugkarosserie auf eine Transporteinrichtung (Drehschemel) aufgesetzt werden kann. Mittels einer Fördereinrichtung wird die Transporteinrichtung die Tauchlackierstraße, die eine Mehrzahl von Prozesszonen mit jeweils einem Behandlungsbad aufweist, entlangbewegt und in einem so genannten Rotationstauchverfahren (Rodip-Verfahren) lackiert. Die Behandlungsanlage weist eine Trocknungsstation auf, in der die lackierte Fahrzeugkarosserie getrocknet werden und dann in Nachbearbeitungsstationen, die parallel zur Tauchlackierstraße angeordnet sind, überführt werden. Der Trocknungsstation sind zwei weitere Prozessstationen nachgelagert, in denen die unbeladenen Transporteinrichtungen zunächst in einem Reinigungsbad durch einen Rotationseintauchprozess gereinigt werden und anschließend in einem nachgelagerten Spülbad gespült werden. Die auf diese Weise nach dem Ende des Tauchlackierprozesses gereinigten Transporteinrichtungen werden in einem Rücklauf, der sich oberhalb der Tauchlackierstraße erstreckt, wieder zur Ladestation gefördert und können dort wieder mit einer unlackierten Fahrzeugkarosserie beladen werden. Ein Nachteil der aus der vorstehend genannten Druckschrift bekannten Lösung besteht darin, dass sie relativ viel Platz beansprucht.

Hier setzt die vorliegende Erfindung an.

Der vorliegenden Erfindung liegt die Aufgabe zugrunde, eine Behandlungsanlage der eingangs genannten Art zur Oberflächenbehandlung von Gegenständen, insbesondere Fahrzeugkarosserien, zur Verfügung zu stellen, die kompakter als die aus dem Stand der Technik bekannten Lösungen ausgeführt ist und eine effiziente Reinigung der Transporteinrichtungen ermöglicht. Darüber hinaus liegt der vorliegenden Erfindung die Aufgabe zugrunde, ein Verfahren zur Oberflächenbehandlung von Gegenständen, insbesondere Fahrzeugkarosserien, zu schaffen, bei dem die Reinigung der Transporteinrichtungen nach der Oberflächenbehandlung gegenüber dem Stand der Technik vereinfacht werden kann.

Die Lösung dieser Aufgabe liefert eine Behandlungsanlage zur Oberflächenbehandlung von Gegenständen, insbesondere Fahrzeugkarosserien, der eingangs genannten Art mit den Merkmalen des kennzeichnenden Teils des Anspruchs 1. Hinsichtlich des Verfahrens wird diese Aufgabe durch ein Verfahren mit den Merkmalen des Anspruchs 11 gelöst. Die Unteransprüche betreffen vorteilhafte Weiterbildungen der Erfindung.

Gemäß Anspruch 1 zeichnet sich eine erfindungsgemäße Behandlungsanlage zum Behandeln von Gegenständen, insbesondere Fahrzeugkarosserien, dadurch aus, dass die mindestens eine Reinigungsvorrichtung in einer zweiten Förderebene der Behandlungsanlage angeordnet ist, die in vertikaler Richtung zur ersten Förderebene versetzt ist. Durch diese Maßnahme kann erreicht werden, dass die Reinigungsvorrichtung relativ platzsparend in der zweiten Förderebene und damit im Rücklauf der Behandlungsanlage angeordnet werden kann. Dadurch ist es in vorteilhafter Weise möglich, die gesamte Behandlungsanlage insgesamt kompakter auszuführen als die aus dem Stand der Technik, insbesondere aus dem US-Patent US 5,110,440, bekannten Lösungen. Ein weiterer Vorteil der hier vorgeschlagenen Lösung besteht darin, dass die Oberflächenbehandlung der Gegenstände in einer anderen Förderebene der Behandlungsanlage durchgeführt wird als der Reinigungsprozess der Transporteinrichtungen.

In einer besonders vorteilhaften Ausführungsform wird vorgeschlagen, dass die zweite Förderebene unterhalb der ersten Förderebene angeordnet ist. Mit anderen Worten ist also in dieser Ausführungsform die erste Förderebene, in der die Oberflächen der Gegenstände in den Behandlungsbädern behandelt werden, oberhalb der zweiten Förderebene, in der eine Reinigung der leeren Transporteinrichtungen erfolgt, angeordnet. In einer alternativen Ausführungsform kann auch vorgesehen sein, dass die zweite Förderebene oberhalb der ersten Förderebene angeordnet ist. In dieser Ausführungsform ist also die erste Förderebene, in der die Gegenstände behandelt werden, unterhalb der zweiten Förderebene, in der eine Reinigung der leeren Transporteinrichtungen erfolgt, angeordnet.

In einer bevorzugten Ausführungsform wird vorgeschlagen, dass die Reinigungsvorrichtung zumindest ein Reinigungsbad umfasst, in das die Transporteinrichtungen einbringbar sind. Die leeren Transporteinrichtungen können mit Hilfe der Fördereinrichtung nacheinander in das mindestens eine Reinigungsbad eingebracht werden, um die Transporteinrichtungen von Rückständen der Prozessflüssigkeiten, mit denen sie in den Behandlungsbädern beaufschlagt wurden, zu befreien. Zu diesem Zweck können die Transporteinrichtungen eine bestimmte voreingestellte oder voreinstellbare Verweildauer in dem Reinigungsbad verweilen. Es kann auch vorgesehen sein, dass die Behandlungsanlage eine Anzahl von Reinigungsbädern aufweist, die im Rücklauf der Behandlungsanlage in Förderrichtung hintereinander angeordnet sind. Um die Reinigungswirkung der Reinigungsvorrichtung weiter zu verbessern, sieht eine besonders vorteilhafte Ausführungsform vor, dass die Reinigungsvorrichtung zumindest eine Spüleinrichtung umfasst, innerhalb derer die Transporteinrichtungen mit einem Spülfluid beaufschlagbar sind. Vorzugsweise ist die Spüleinrichtung in Förderrichtung hinter dem mindestens einen Reinigungsbad angeordnet. Es kann in einer vorteilhaften Ausführungsform zum Beispiel vorgesehen sein, dass die Spüleinrichtung eine Spritzspülwanne umfasst, mittels derer die Transporteinrichtungen in einem kombinierten Spritz- und Spülprozess gereinigt werden können.

In einer besonders bevorzugten Ausführungsform wird vorgeschlagen, dass die Transporteinrichtungen und die Fördereinrichtung derart ausgebildet sind, dass die Transporteinrichtungen mit den darauf angeordneten Gegenständen durch Überlagerung einer Translations- und einer Rotationsbewegung am Anfang eines jeden Behandlungsbades in das Behandlungsbad eingetaucht werden können und am Ende des Behandlungsbades durch eine Überlagerung einer Translations- und einer Rotationsbewegung wieder aus dem jeweiligen Behandlungsbad gefördert werden können. Durch ein derartiges Rotationstauchverfahren kann in jeder Prozessstufe eine effiziente Behandlung der Oberflächen der Gegenstände erreicht werden. Die Transporteinrichtungen können vorzugsweise als Drehschemel ausgebildet sein, die eine Rotation um ihre eigene Achse ermöglichen.

In einer besonders bevorzugten Ausführungsform ist vorgesehen, dass die Transporteinrichtungen und die Fördereinrichtung derart ausgebildet sind, dass die Transporteinrichtungen durch Überlagerung einer Translations- und einer Rotationsbewegung am Anfang des mindestens einen Reinigungsbades in das Reinigungsbad eingetaucht werden können und am Ende des Reinigungsbades durch eine Überlagerung einer Translations- und einer Rotationsbewegung wieder aus dem Reinigungsbad gefördert werden können. Durch ein derartiges Rotationstauchverfahren kann eine effiziente Reinigung der Transporteinrichtungen erreicht werden. Vorzugsweise können die Transporteinrichtungen unmittelbar nach einer Umlenkung ihrer Förderbewegung von der ersten Förderebene in die zweite Förderebene, die mit Hilfe von Umlenkmitteln erfolgt, welche insbesondere als Umlenkrollen ausgebildet sein können, in das Reinigungsbad eingetaucht werden, in dem sie dann mit einem Reinigungsfluid beaufschlagt werden.

Es besteht in einer weiteren vorteilhaften Ausführungsform die Möglichkeit, dass die Transporteinrichtungen und die Fördereinrichtung derart ausgebildet sind, dass die Transporteinrichtungen durch Überlagerung einer Translations- und einer Rotationsbewegung in die Spüleinrichtung gefördert werden.

Ein Verfahren zur Oberflächenbehandlung von Gegenständen, insbesondere Fahrzeugkarosserien, in einer Behandlungsanlage mit einer Mehrzahl von Transporteinrichtungen, die kontinuierlich durch die Behandlungsanlage gefördert werden, umfasst gemäß-Anspruch 11 die Schritte
- am Anfang einer ersten Förderebene wird auf jeder der Transporteinrichtungen jeweils mindestens ein zu behandelnder Gegenstand lösbar angeordnet,
- die Transporteinrichtung wird zusammen mit dem darauf angeordneten Gegenstand in der ersten Förderebene gefördert und in mindestens ein Behandlungsbad zur Oberflächenbehandlung des Gegenstands eingebracht,
- der Gegenstand wird nach der Oberflächenbehandlung von der Transporteinrichtung entfernt,
- die Transporteinrichtung wird in eine vertikal zur ersten Förderebene versetzte zweite Förderebene gefördert und in mindestens einer Reinigungsvorrichtung gereinigt,
- die Transporteinrichtung wird an den Anfang der ersten Förderebene gefördert.

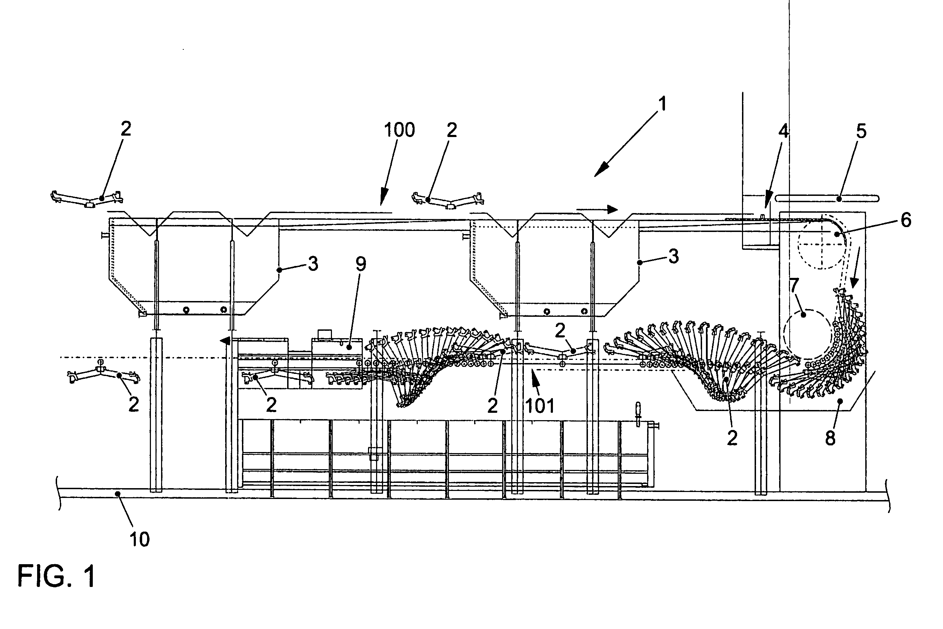

Weitere Merkmale und Vorteile der vorliegenden Erfindung werden deutlich anhand der nachfolgenden Beschreibung eines bevorzugten Ausführungsbeispiels unter Bezugnahme auf die beiliegende Fig. 1, die einen Teil einer Behandlungsanlage 1 zum Behandeln von Gegenständen, insbesondere Fahrzeugkarosserien, in einer Seitenansicht zeigt.

Die Behandlungsanlage 1 weist eine Trägerstruktur 10 auf, die zwei Förderebenen 100, 101 definiert. Eine erste Förderebene 100 und eine zweite Förderebene 101 erstrecken sich im Wesentlichen parallel zueinander, wobei die zweite Förderebene 101 unterhalb der ersten Förderebene 100 verläuft und damit in vertikaler Richtung versetzt zur ersten Förderebene 100 angeordnet ist. In der ersten Förderebene 100 sind mehrere Behandlungsbäder 3 vorgesehen, die in Förderrichtung, welche in Fig. 1 durch einen Pfeil angedeutet ist, hintereinander angeordnet sind. Die Behandlungsbäder 3 innerhalb derer die Oberflächen der Gegenstände, die insbesondere Fahrzeugkarosserien sein können, behandelt werden können, sind jeweils mit einer Prozessflüssigkeit gefüllt. Die Behandlungsanlage 1 zum Behandeln von Gegenständen ist in dem hier gezeigten Ausführungsbeispiel zum kathodischen Tauchlackieren der Gegenstände geeignet. Bei einem kathodischen Tauchlackierverfahren handelt es um ein elektrochemisches Verfahren, bei dem die zu lackierenden Gegenstände in einem Behandlungsbad 3 oder - wie in dem hier gezeigten Ausführungsbeispiel - in mehreren Behandlungsbädern 3 beschichtet werden. Da kathodische Tauchlackierverfahren aus dem Stand der Technik bereits hinlänglich bekannt sind, sollen an dieser Stelle die Besonderheiten derartiger Verfahren nicht näher erläutert werden.

Die Behandlungsanlage 1 umfasst eine Mehrzahl von Transporteinrichtungen 2, auf denen jeweils mindestens einer der in der Behandlungsanlage 1 zu behandelnden Gegenstände, insbesondere eine Fahrzeugkarosserie, lösbar angeordnet werden kann. Vorzugsweise weist die Behandlungsanlage 1 zu diesem Zweck am Anfang der ersten Förderebene 100 eine hier nicht explizit gezeigte Ladestation auf, in der die Gegenstände auf die entsprechenden Transporteinrichtungen 2 geladen werden können. Die Transporteinrichtungen 2 werden mit Hilfe einer Fördereinrichtung (nicht mit Bezugszeichen versehen), die mit den Transporteinrichtungen 2 zusammenwirkt, in einem kontinuierlich umlaufenden Prozess in Förderrichtung der Behandlungsanlage 1 entlang der ersten Förderebene 100 und der zweiten Förderebene 101 gefördert.

Die Transporteinrichtungen 2 und die Fördereinrichtung sind dabei so ausgebildet, dass die Transporteinrichtungen 2 mit den darauf angeordneten Gegenständen in der ersten Förderebene 100 durch Überlagerung einer Translations- und einer Rotationsbewegung in einem Rotationstauchverfahren am Anfang eines jeden Behandlungsbades 3 in das Behandlungsbad 3 eingetaucht werden können und am Ende des Behandlungsbades 3 durch eine erneute Überlagerung einer Translations- und einer Rotationsbewegung wieder aus dem jeweiligen Behandlungsbad 3 gefördert werden können. Ein derartiges Rotationstauchverfahren ermöglicht eine besonders gründliche und effiziente Tauchlackierung beziehungsweise Behandlung der Oberflächen der Gegenstände. Vorzugsweise sind die Transporteinrichtungen 2 als Drehschemel ausgebildet, die eine Rotation um ihre eigene Achse ermöglichen.

Die Behandlungsanlage 1 weist am Ende der ersten Förderebene 100 eine Entriegelungsvorrichtung 4 auf, mittels derer die lösbare Verbindung der Gegenstände mit der jeweiligen Transporteinrichtung 2 vorzugsweise automatisch entriegelt werden kann. An die Entriegelungsvorrichtung 4 schließt sich in Förderrichtung eine Ausgabevorrichtung 5 an, mittels derer die Gegenstände nach der Oberflächenbehandlung (Lackierung) von der jeweiligen Transporteinrichtung 2 entnommen und aus der Behandlungsanlage 1 geführt werden können. Die lackierten Gegenstände können anschließend zum Beispiel einer hier nicht explizit dargestellten Trocknungsstation, in der sie getrocknet werden können, zugeführt werden. Darüber hinaus können auch weitere Nachbearbeitungsstationen, in denen die Oberflächen der Gegenstände nachbearbeitet werden können, vorgesehen sein.

Damit die leeren Transporteinrichtungen 2 nach der Oberflächenbehandlung der Gegenstände gereinigt und dadurch von Rückständen der Prozessflüssigkeiten, mit denen sie während der Behandlung in den Behandlungsbädern 3 beaufschlagt wurden, befreit werden können, werden Transporteinrichtungen 2 über ein erstes Umlenkmittel 6 und über ein zweites Umlenkmittel 7 in die zweite Förderebene 101 umgelenkt, welche sich unterhalb der ersten Förderebene 100 erstreckt, und dort einer Reinigungsvorrichtung zugeführt. Die beiden Umlenkmittel 6, 7 sind in diesem Ausführungsbeispiel als Umlenkrollen ausgebildet.

Die Reinigungsvorrichtung umfasst in diesem Ausführungsbeispiel ein Reinigungsbad 8, das am Anfang der zweiten Förderebene 101 angeordnet ist und mit einem Reinigungsfluid gefüllt ist, sowie eine Spüleinrichtung 9, die in Förderrichtung hinter dem Reinigungsbad 8 angeordnet ist. An Stelle eines einzelnen Reinigungsbades 8 und einer einzelnen Spüleinrichtung 9 können auch mehrere, in der zweiten Förderebene 101 hintereinander angeordnete Reinigungsbäder 8 und/oder Spüleinrichtungen 9 vorgesehen sein.

Die Transporteinrichtungen 2 werden in diesem Ausführungsbeispiel nach der Umlenkung mittels der Umlenkmittel 6, 7 durch Überlagerung einer Translations- und einer Rotationsbewegung am Anfang des Reinigungsbades 8 unmittelbar in das Reinigungsbad 8 eingetaucht und am Ende des Reinigungsbades 8 durch eine Überlagerung einer Translations- und einer Rotationsbewegung wieder aus dem Reinigungsbad 8 gefördert. Mit anderen Worten werden die Transporteinrichtungen 2 nach der Umlenkung also direkt in das Reinigungsbad 8 eingetaucht und darin mit Hilfe des Reinigungsfluids gereinigt.

Nach einer bestimmten voreingestellten beziehungsweise voreinstellbaren Verweildauer im Reinigungsbad 8 (zum Beispiel etwa 60 Sekunden), werden die Transporteinrichtungen 2 durch eine kombinierte Translations- und Rotationsbewegung aus dem Reinigungsbad 8 herausbewegt und anschließend der Spüleinrichtung 9 zugeführt, in der sie mit einem Spülfluid gespült werden. Die Spüleinrichtung 9 umfasst in diesem Ausführungs beispiel eine Spritzspülwanne, in der die Transporteinrichtungen 2 saubergespritzt werden. Man erkennt, dass die Transporteinrichtungen 2 wiederum durch eine Überlagerung einer Translations- und einer Rotationsbewegung in die Spüleinrichtung 9 gefördert werden. Nach dem Spülprozess in der Spüleinrichtung 9 werden die Transporteinrichtungen 2 in einer reinen Translationsbewegung in der zweiten Förderebene 101 kontinuierlich weiter in Förderrichtung bewegt und durch hier ebenfalls nicht explizit dargestellte Umlenkmittel, die zum Beispiel auch als Umlenkrollen ausgebildet sein können, wieder aus der zweiten Förderebene 101 in die erste Förderebene 100 der Behandlungsanlage 1 bewegt. In der Ladestation am Anfang der ersten Förderebene 100 können dann erneut zu behandelnde Gegenstände auf die leeren Transporteinrichtungen 2 aufgesetzt werden und, wie oben ausführlich erläutert, in den Behandlungsbädern 3 der Behandlungsanlage 1 behandelt werden.

### BEZUGSZEICHENLISTE

- 1: Behandlungsanlage
- 2: Transporteinrichtung
- 3: Behandlungsbad
- 4: Entriegelungsvorrichtung
- 5: Ausgabevorrichtung 6 erstes Umlenkmittel
- 7: zweites Umlenkmittel
- 8: Reinigungsbad
- 9: Spüleinrichtung
- 10: Trägerstruktur
- 100: erste Förderebene
- 101: zweite Förderebene

## Patentansprüche

1. Behandlungsanlage (1) zur Oberflächenbehandlung von Gegenständen, insbesondere Fahrzeugkarosserien, umfassend
- eine Mehrzahl von Transporteinrichtungen (2), auf denen jeweils mindestens ein zu behandeinder Gegenstand lösbar anbringbar ist,
- eine Fördereinrichtung, mittels derer die Transporteinrichtungen (2) durch die Behandlungsanlage (1) förderbar sind,
- mindestens ein Behandlungsbad (3), das in einer ersten Förderebene (100) der Behandlungsanlage (1) angeordnet ist und in das die Transporteinrichtungen (2) mit den darauf angeordneten Gegenständen einbringbar sind,
- mindestens eine Reinigungsvorrichtung, die zum Reinigen der Transporteinrichtungen (2) nach der Oberflächenbehandlung der Gegenstände geeignet und eingerichtet ist,
**dadurch gekennzeichnet, dass** die mindestens eine Reinigungsvorrichtung in einer zweiten Förderebene (101) der Behandlungsanlage (1) angeordnet ist, die in vertikaler Richtung zur ersten Förderebene (100) versetzt ist.

2. Behandlungsanlage (1) nach Anspruch 1, **dadurch gekennzeichnet, dass** die zweite Förderebene (101) unterhalb der ersten Förderebene (100) angeordnet ist.

3. Behandlungsanlage (1) nach Anspruch 1, **dadurch gekennzeichnet, dass** die zweite Förderebene (101) oberhalb der ersten Förderebene (100) angeordnet ist.

4. Behandlungsanlage (1) nach einem der Ansprüche 1 bis 3, **dadurch gekennzeichnet, dass** die Reinigungsvorrichtung zumindest ein Reinigungsbad (8) umfasst, in das die Transporteinrichtungen (2) einbringbar sind.

5. Behandlungsanlage (1) nach einem der Ansprüche 1 bis 4, **dadurch gekennzeichnet, dass** die Reinigungsvorrichtung zumindest eine Spüleinrichtung (9) umfasst, innerhalb derer die Transporteinrichtungen (2) mit einem Spülfluid beaufschlagbar sind.

6. Behandlungsanlage (1) nach Anspruch 5, **dadurch gekennzeichnet, dass** die Spüleinrichtung (9) in Förderrichtung hinter dem mindestens einen Reinigungsbad (8) angeordnet ist.

7. Behandlungsanlage (1) nach einem der Ansprüche 5 oder 6, **dadurch gekennzeichnet, dass** die Spüleinrichtung (9) eine Spritzspülwanne umfasst.

8. Behandlungsanlage (1) nach einem der Ansprüche 1 bis 7, **dadurch gekennzeichnet, dass** die Transporteinrichtungen (2) und die Fördereinrichtung derart ausgebildet sind, dass die Transporteinrichtungen (2) mit den darauf angeordneten Gegenständen durch Überlagerung einer Translations- und einer Rotationsbewegung am Anfang eines jeden Behandlungsbades (3) in das Behandlungsbad (3) eingetaucht werden können und am Ende des Behandlungsbades (3) durch eine Überlagerung einer Translations- und einer Rotationsbewegung wieder aus dem jeweiligen Behandlungsbad (3) gefördert werden können.

9. Behandlungsanlage (1) nach einem der Ansprüche 4 bis 8, **dadurch gekennzeichnet, dass** die Transporteinrichtungen (2) und die Fördereinrichtung derart ausgebildet sind, dass die Transporteinrichtungen (2) durch Überlagerung einer Translations- und einer Rotationsbewegung am Anfang des mindestens einen Reinigungsbades (8) in das Reinigungsbad (8) eingetaucht werden können und am Ende des Reinigungsbades (8) durch eine Überlagerung einer Translations- und einer Rotationsbewegung wieder aus dem Reinigungsbad (8) gefördert werden können.

10. Behandlungsanlage (1) nach einem der Ansprüche 5 bis 9, **dadurch gekennzeichnet, dass** die Transporteinrichtungen (2) und die Fördereinrichtung derart ausgebildet sind, dass die Transporteinrichtungen (2) durch Überlagerung einer Translations- und einer Rotationsbewegung in die Spüleinrichtung (9) gefördert werden.

11. Verfahren zur Oberflächenbehandlung von Gegenständen, insbesondere Fahrzeugkarosserien, in einer Behandlungsanlage (1) mit einer Mehrzahl von Transporteinrichtungen (2), die kontinuierlich durch die Behandlungsanlage (1) gefördert werden, umfassend die Schritte
- am Anfang einer ersten Förderebene (100) wird auf jeder der Transporteinrichtungen (2) jeweils mindestens ein zu behandelnder Gegenstand lösbar angeordnet,
- die Transporteinrichtung (2) wird zusammen mit dem darauf angeordneten Gegenstand in der ersten Förderebene (100) gefördert und in mindestens ein Behandlungsbad (3) zur Oberflächenbehandlung des Gegenstands eingebracht,
- der Gegenstand wird nach der Oberflächenbehandlung von der Transporteinrichtung (2) entfernt,
- die Transporteinrichtung (2) wird in eine vertikal zur ersten Förderebene (100) versetzte zweite Förderebene (101) gefördert und in mindestens einer Reinigungsvorrichtung gereinigt,
- die Transporteinrichtung (2) wird an den Anfang der ersten Förderebene (100) gefördert.

12. Verfahren nach Anspruch 11, **dadurch gekennzeichnet, dass** die Transporteinrichtung (2) mit dem darauf angeordneten Gegenstand nacheinander in mehrere Behandlungsbäder (3) eingebracht wird.

13. Verfahren nach Anspruch 11 oder 12, **dadurch gekennzeichnet, dass** die Transporteinrichtung (2) mit dem darauf angeordneten Gegenstand durch Überlagerung einer Translations- und einer Rotationsbewegung am Anfang eines jeden Behandlungsbades (3) in das Behandlungsbad (3) eingetaucht wird und am Ende des Behandlungsbades (3) durch eine Überlagerung einer Translations- und einer Rotationsbewegung wieder aus dem jeweiligen Behandlungsbad (3) gefördert wird.

14. Verfahren nach einem der Ansprüche 11 bis 13, **dadurch gekennzeichnet, dass** die Transporteinrichtung (2) durch Überlagerung einer Translations- und einer Rotationsbewegung am Anfang eines Reinigungsbades (8) der Reinigungsvorrichtung in das Reinigungsbad (8) eingetaucht wird und am Ende des Reinigungsbades (8) durch eine Überlagerung einer Translations- und einer Rotationsbewegung wieder aus dem Reinigungsbad (8) gefördert wird.

15. Verfahren nach einem der Ansprüche 11 bis 14, **dadurch gekennzeichnet, dass** die Transporteinrichtung (2) in einer Spüleinrichtung (9) der Reinigungsvorrichtung gespült wird.

## Claims

1. Treatment system (1) for the surface treatment of items, particularly vehicle bodies, comprising
- a plurality of transport devices (2), on each of which at least one item which is to be treated can be releasably mounted,
- a conveying device by means of which the transport devices (2) can be conveyed through the treatment system (1),
- at least one treatment bath (3) which is arranged in a first conveying plane (100) of the treatment system (1) and into which the transport devices (2) with the items arranged thereon can be fed,
- at least one cleaning apparatus which is suitable and is designed for cleaning the transport devices (2) after the surface treatment of the items,
**characterized in that** the at least one cleaning apparatus is arranged in a second conveying plane (101) of the treatment system (1), which conveying plane is offset in the vertical direction with respect to the first conveying plane (100).

2. Treatment system (1) according to Claim 1, **characterized in that** the second conveying plane (101) is arranged below the first conveying plane (100).

3. Treatment system (1) according to Claim 1, **characterized in that** the second conveying plane (101) is arranged above the first conveying plane (100).

4. Treatment system (1) according to one of Claims 1 to 3, **characterized in that** the cleaning apparatus comprises at least one cleaning bath (8) into which the transport devices (2) can be fed.

5. Treatment system (1) according to one of Claims 1 to 4, **characterized in that** the cleaning apparatus comprises at least one rinsing device (9) within which the transport devices (2) can be acted upon with a rinsing fluid.

6. Treatment system (1) according to Claim 5, **characterized in that** the rinsing device (9) is arranged behind the at least one cleaning bath (8) in the conveying direction.

7. Treatment system (1) according to either of Claims 5 and 6, **characterized in that** the rinsing device (9) comprises a spray-type rinsing trough.

8. Treatment system (1) according to one of Claims 1 to 7, **characterized in that** the transport devices (2) and the conveying device are designed in such a manner that the transport devices (2) with the items arranged thereon can be immersed in the treatment bath (3) by superimposition of a translational and a rotational movement at the beginning of each treatment bath (3) and can be conveyed out of the respective treatment bath (3) again at the end of the treatment bath (3) by superimposition of a translational and a rotational movement.

9. Treatment system (1) according to one of Claims 4 to 8, **characterized in that** the transport devices (2) and the conveying device are designed in such a manner that the transport devices (2) can be immersed in the cleaning bath (8) by superimposition of a translational and a rotational movement at the beginning of the at least one cleaning bath (8) and can be conveyed out of the cleaning bath (8) again at the end of the cleaning bath (8) by superimposition of a translational and a rotational movement.

10. Treatment system (1) according to one of Claims 5 to 9, **characterized in that** the transport devices (2) and the conveying device are designed in such a manner that the transport devices (2) are conveyed into the rinsing device (9) by superimposition of a translational and a rotational movement.

11. Method for the surface treatment of items, particularly vehicle bodies, in a treatment system (1) with a plurality of transport devices (2) which are conveyed continuously through the treatment system (1), the method comprising the following steps
- in each case at least one item to be treated is arranged releasably on each of the transport devices (2) at the beginning of a first conveying plane (100),
- the transport device (2) together with the item arranged thereon is conveyed in the first conveying plane (100) and is fed into at least one treatment bath (3) for the surface treatment of the item,
- the item is removed by the transport device (2) after the surface treatment,
- the transport device (2) is conveyed into a second conveying plane (101) offset vertically with respect to the first conveying plane (100) and is cleaned in at least one cleaning apparatus,
- the transport device (2) is conveyed to the beginning of the first conveying plane (100).

12. Method according to Claim 11, **characterized in that** the transport device (2) with the item arranged thereon is fed successively into a plurality of treatment baths (3).

13. Method according to Claim 11 or 12, **characterized in that** the transport device (2) with the item arranged thereon is immersed in the treatment bath (3) by superimposition of a translational and a rotational movement at the beginning of each treatment bath (3) and is conveyed out of the respective treatment bath (3) again at the end of the treatment bath (3) by superimposition of a translational and a rotational movement.

14. Method according to one of Claims 11 to 13, **characterized in that** the transport device (2) is immersed in the cleaning bath (8) by superimposition of a translational and a rotational movement at the beginning of a cleaning bath (8) of the cleaning apparatus and is conveyed out of the cleaning bath (8) again at the end of the cleaning bath (8) by superimposition of a translational and a rotational movement.

15. Method according to one of Claims 11 to 14, **characterized in that** the transport device (2) is rinsed in a rinsing device (9) of the cleaning apparatus.

## Revendications

1. Installation de traitement (1) pour le traitement de surface d'objets, notamment de carrosseries de véhicules, comprenant :
- une pluralité de dispositifs de transport (2) sur lesquels peut à chaque fois être appliqué de manière amovible au moins un objet à traiter,
- un dispositif de convoyage au moyen duquel les dispositif de transport (2) peuvent être convoyés à travers l'installation de traitement (1),
- au moins un bain de traitement (3) qui est disposé dans un premier plan de convoyage (100) de l'installation de traitement (1) et dans lequel peuvent être introduits les dispositifs de transport (2) avec les objets disposés sur eux,
- au moins un dispositif de nettoyage qui est approprié et prévu pour le nettoyage des dispositifs de transport (2) après le traitement de surface des objets,
**caractérisée en ce que** l'au moins un dispositif de nettoyage est disposé dans un deuxième plan de convoyage (101) de l'installation de traitement (1), qui est décalé dans la direction verticale par rapport au premier plan de convoyage (100).

2. Installation de traitement (1) selon la revendication 1, **caractérisée en ce que** le deuxième plan de convoyage (101) est disposé en dessous du premier plan de convoyage (100).

3. Installation de traitement (1) selon la revendication 1, **caractérisée en ce que** le deuxième plan de convoyage (101) est disposé au-dessus du premier plan de convoyage (100).

4. Installation de traitement (1) selon l'une quelconque des revendications 1 à 3, **caractérisée en ce que** le dispositif de nettoyage comprend au moins un bain de nettoyage (8) dans lequel peuvent être introduits les dispositifs de transport (2).

5. Installation de traitement (1) selon l'une quelconque des revendications 1 à 4, **caractérisée en ce que** le dispositif de nettoyage comprend au moins un dispositif de rinçage (9) à l'intérieur duquel les dispositifs de transport (2) peuvent être sollicités avec un fluide de rinçage.

6. Installation de traitement (1) selon la revendication 5, **caractérisée en ce que** le dispositif de rinçage (9) est disposé dans la direction de convoyage derrière l'au moins un bain de nettoyage (8).

7. Installation de traitement (1) selon l'une quelconque des revendications 5 ou 6, **caractérisée en ce que** le dispositif de rinçage (9) comprend un bac de rinçage par pulvérisation.

8. Installation de traitement (1) selon l'une quelconque des revendications 1 à 7, **caractérisée en ce que** les dispositifs de transport (2) et le dispositif de convoyage sont réalisés de telle sorte que les dispositifs de transport (2) puissent être plongés, avec les objets disposés sur eux, par superposition d'un mouvement de translation et d'un mouvement de rotation au début de chaque bain de traitement (3) dans ledit bain de traitement (3), et puissent être convoyés à la fin du bain de traitement (3) à nouveau hors dudit bain de traitement (3) par superposition d'un mouvement de translation et d'un mouvement de rotation.

9. Installation de traitement (1) selon l'une quelconque des revendications 4 à 8, **caractérisée en ce que** les dispositifs de transport (2) et le dispositif de convoyage sont réalisés de telle sorte que les dispositifs de transport (2) puissent être plongés par superposition d'un mouvement de translation et d'un mouvement de rotation au début de l'au moins un bain de nettoyage (8) dans ledit bain de nettoyage (8), et puissent être convoyés à la fin du bain de nettoyage (8) à nouveau hors dudit bain de nettoyage (8) par superposition d'un mouvement de translation et d'un mouvement de rotation.

10. Installation de traitement (1) selon l'une quelconque des revendications 5 à 9, **caractérisée en ce que** les dispositifs de transport (2) et le dispositif de convoyage sont réalisés de telle sorte que les dispositifs de transport (2) soient convoyés dans le dispositif de rinçage (9) par superposition d'un mouvement de translation et d'un mouvement de rotation.

11. Procédé de traitement de surface d'objets, en particulier de carrosseries de véhicules, dans une installation de traitement (1) comprenant une pluralité de dispositifs de transport (2), qui sont convoyés en continu à travers l'installation de traitement (1), comprenant les étapes suivantes :
- au début d'un premier plan de convoyage (100), à chaque fois au moins un objet à traiter est disposé de manière amovible sur chacun des dispositifs de transport (2),
- le dispositif de transport (2) est convoyé conjointement avec l'objet disposé sur lui dans le premier plan de convoyage (100) et est introduit dans au moins un bain de traitement (3) pour le traitement de surface de l'objet,
- l'objet est ensuite retiré du dispositif de transport (2) après le traitement de surface,
- le dispositif de transport (2) est convoyé dans un deuxième plan de convoyage (101) décalé verticalement par rapport au premier plan de convoyage (100) et est nettoyé dans au moins un dispositif de nettoyage,
- le dispositif de transport (2) est convoyé au début du premier plan de convoyage (100).

12. Procédé selon la revendication 11, **caractérisé en ce que** le dispositif de transport (2) est introduit avec l'objet disposé sur lui successivement dans plusieurs bains de traitement (3).

13. Procédé selon la revendication 11 ou 12, **caractérisé en ce que** le dispositif de transport (2) avec l'objet disposé sur lui est plongé dans le bain de traitement (3) par superposition d'un mouvement de translation et d'un mouvement de rotation au début de chaque bain de traitement (3), et est à nouveau convoyé hors dudit bain de traitement (3) à la fin du bain de traitement (3) par superposition d'un mouvement de translation et d'un mouvement de rotation.

14. Procédé selon l'une quelconque des revendications 11 à 13, **caractérisé en ce que** le dispositif de transport (2) est plongé dans le bain de nettoyage (8) par superposition d'un mouvement de translation et d'un mouvement de rotation au début d'un bain de nettoyage (8) du dispositif de nettoyage, et est à nouveau convoyé hors dudit bain de nettoyage (8) à la fin du bain de nettoyage (8) par superposition d'un mouvement de translation et d'un mouvement de rotation.

15. Procédé selon l'une quelconque dés revendications 11 à 14, **caractérisé en ce que** le dispositif de transport (2) est rincé dans un dispositif de rinçage (9) du dispositif de nettoyage.
